# EUROPEAN PATENT APPLICATION

(11) **EP 4 322 561 A1**
(43) Date of publication of application: **14.02.2024**
(21) Application number: 23188440.4
(22) Date of filing: 28.07.2023
(51) Int. Cl.: H04W 4/06, H04W 36/00, H04W 76/10, H04W 76/20, H04W 76/22, H04W 76/40

(54) **REQUEST TO JOIN MBS SESSION DURING ESTABLISHMENT PROCEDURE**

(30) Priority: 11.08.2022 US 202263371112 P; 10.07.2023 US 202318220189
(71) Applicant: MediaTek Inc., Hsinchu City 30078 (TW)
(72) Inventor: LIN, Yu-Hsin, 30078 Hsinchu City (TW); CHEN, Chi-Hsien, 30078 Hsinchu City (TW); LIN, Yuan-Chieh, 30078 Hsinchu City (TW)
(74) Representative: Hoefer & Partner Patentanwälte mbB

(57) **Abstract**

A method for requesting to join an MBS session via a PDU session establishment procedure for existing PDU or MA PDU session is provided. A UE sends a PDU session establishment request message that includes a requested MBS container IE to request to join an MBS session. The request message initiates a PDU session establishment procedure (110), with a request type indicating that the PDU session establishment procedure is for an existing PDU session, or for an MA PDU session. A specific request type is used to indicate: 1)HANDOVER 5G PDU SESSION FROM NON-3GPP TO 3GPP; 2) TRANSFER 4G PDN CONNECTION, EPS, TO 5G; 3) TRANSFER 4G PDN CONNECTION, NON-3GPP, TO 5G; 4) ESTABLISH UP RESOURCE OVER 3GPP FOR 5G MA PDU; and 5) TRANSFER MA PDU, PDN LEG IN EPS, TO 5G MA PDU.

## Description

### CROSS REFERENCE TO RELATED APPLICATIONS

This application claims priority under 35 U.S.C. §119 from U.S. Provisional Application Number 63/371,112, entitled "Request to join MBS Session during Establishment Procedure", filed on August 11, 2022, the subject matter of which is incorporated herein by reference.

### TECHNICAL FIELD

The disclosed embodiments relate generally to wireless communication, and, more particularly, to a method for Multicast Broadcast Services (MBS) session handling in 5G systems.

### BACKGROUND

The wireless communications network has grown exponentially over the years. A long-term evolution (LTE) system offers high peak data rates, low latency, improved system capacity, and low operating cost resulting from simplified network architecture. LTE systems, also known as the 4G system, also provide seamless integration to older wireless network, such as GSM, CDMA and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The next generation mobile network (NGMN) board has decided to focus the future NGMN activities on defining the end-to-end requirements for 5G new radio (NR) systems.

In 5G/NR, a protocol data unit (PDU) session defines the association between the UE and the data network that provides a PDU connectivity service. The PDU session establishment is a parallel procedure of PDN connection (bearer) procedure in 4G/LTE. Each PDU session is identified by a PDU session ID (PSI), and may include multiple QoS flows and QoS rules. Each PDU session can be established via a 5G access network (e.g., 3GPP radio access network (RAN), or via a non-3GPP access network (AN)). Both the network and the UE can initiate different PDU session procedures, e.g., PDU session establishment procedure, PDU session modification procedure, and PDU session release procedure, for managing PDU sessions. 3GPP also introduced Multi-Access (MA) PDU session in 5GS.

Operators are seeking ways to balance data traffic between mobile cellular networks and non-3GPP access in a way that is transparent to users and reduces mobile network congestion. In 5GS, UEs that can be simultaneously connected to both 3GPP access and non-3GPP access (using 3GPP NAS signalling), thus the 5GS is able to take advantage of these multiple accesses to improve the user experience, optimize the traffic distribution across various accesses. Accordingly, 3GPP introduced Multi-Access (MA) PDU session in 5GS. A MA PDU session uses one 3GPP access network or one non-3GPP access network at a time, or simultaneously one 3GPP access network and one non-3GPP access network.

Multimedia Broadcast and Multicast Service (MBMS) is a broadcasting service offered via existing GSM and UMTS cellular networks. Recently, evolved MBMS (E-MBMS) has been introduced in the LTE specification for broadcasting or multicasting TV, films, and other information such as overnight transmission of newspapers in a digital form. In 5G networks, Multicast and Broadcast Services (MBS) is a point-to-multipoint service that can improve the network efficiency and user experience when transmitting the same content to multiple users. The design principle of 5G MBS is to minimize the implementation impact of the feature by reusing as much as possible 5G unicast architecture and functions.

UE can request to join an MBS by using PDU session establishment procedure or PDU session modification procedure with the *Requested MBS container* IE for the following MBS operations: Join MBS session and Leave MBS session. The network can also apply the PDU session establishment procedure or PDU session modification procedure with the *Received MBS container* IE for the following operations/decisions: MBS service area update, MBS join is accepted, MBS join is rejected, and Remove UE from the MBS session.

In the current 3GPP specification, UE can request to join an MBS by using PDU session establishment procedure for new PDU sessions. However, there are other cases where the UE can initiate PDU session establishment procedure, e.g., for existing PDU sessions or for MA PDU sessions. It's undefined how UE can request to join an MBS by using PDU session establishment procedure for cases other than new PDU sessions.

### A solution is sought.

### SUMMARY

A method for requesting to join an MBS session via a PDU session establishment procedure for existing PDU or MA PDU session is provided. A UE sends a PDU session establishment request message that includes a requested MBS container IE to request to join an MBS session. The request message initiates a PDU session establishment procedure, with a request type indicating that the PDU session establishment procedure is for an existing PDU session, or for an MA PDU session. A specific request type is used to indicate: 1)HANDOVER 5G PDU SESSION FROM NON-3GPP TO 3GPP; 2) TRANSFER 4G PDN CONNECTION (EPS) TO 5G; 3) TRANSFER 4G PDN CONNECTION (NON-3GPP) TO 5G; 4) ESTABLISH UP RESOURCE OVER 3GPP FOR 5G MA PDU; and 5) TRANSFER MA PDU (PDN LEG IN EPS) TO 5G MA PDU. A method and a user equipment according to the invention are defined in the independent claims. The dependent claims define preferred embodiments thereof.

In one embodiment, a UE transmits a PDU session establishment request message and initiates a protocol data unit (PDU) session establishment procedure in a 5G network. The UE requests to join a multicast broadcast services (MBS) session by using the PDU session establishment request message that carries a Requested MBS container IE and a specific request type, wherein the PDU session establishment request message indicates an existing PDU session or a multi-access (MA) PDU session for the PDU session establishment procedure. The UE receives a Received MBS container IE from the network, wherein the received MBS container IE is carried by a PDU session establishment accept message.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary 5G network supporting Multicast Broadcast Services (MBS) and corresponding PDU session establishment procedures in accordance with one novel aspect.
Figure 2 illustrates simplified block diagrams of a user equipment (UE) and a network entity in accordance with embodiments of the current invention.
Figure 3 illustrates one embodiment of PDU session establishment procedure where a UE requests to join an MBS session by transferring a PDU session over non-3GPP access to 3GPP access.
Figure 4 illustrates one embodiment of PDU session establishment procedure where a UE requests to join an MBS session by transferring a PDN connection in EPS to a PDU session in 5GS.
Figure 5 illustrates one embodiment of PDU session establishment procedure where a UE requests to join an MBS session by transferring a PDN connection in non-3GPP connected to EPC to a PDU session in 5GS.
Figure 6 illustrates one embodiment of PDU session establishment procedure where a UE requests to join an MBS session by establishing user-plane resource over 3GPP for an MA PDU session in 5GS.
Figure 7 illustrates one embodiment of PDU session establishment procedure where a UE requests to join an MBS session by transferring an MA PDU session with PDN connection in EPS as user-plane resource over 3GPP to an MA PDU session in 5GS.
Figure 8 is a flow chart of a method of UE joining an MBS session via a PDU session establishment procedure for existing or MA PDU session in accordance with one novel aspect of the present invention.

### DETAILED DESCRIPTION

Reference will now be made in detail to some embodiments of the invention, examples of which are illustrated in the accompanying drawings.

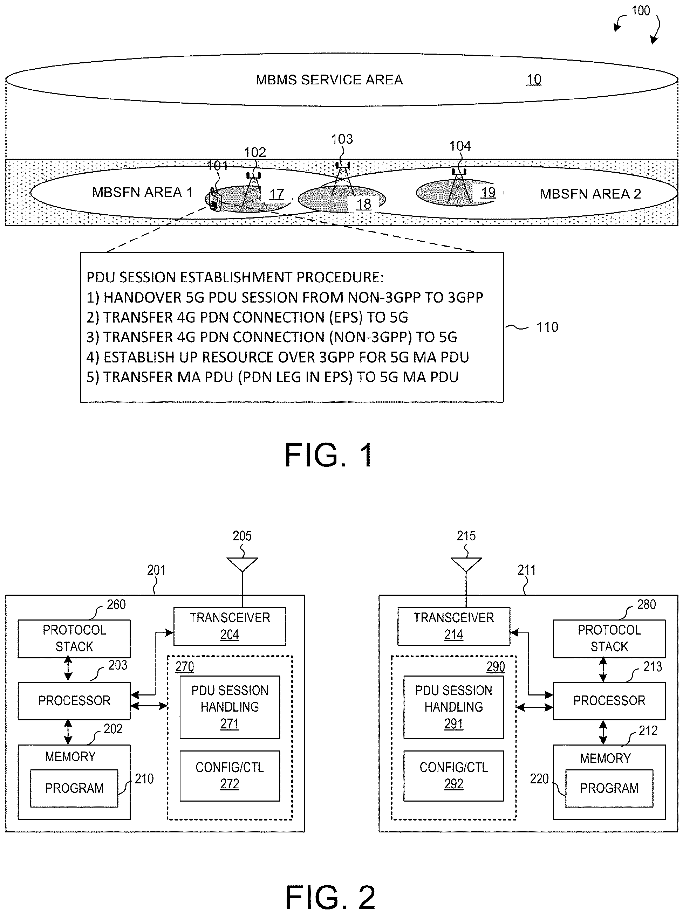

Figure 1 illustrates an exemplary 5G network supporting Multicast Broadcast Services (MBS) and corresponding PDU session establishment procedures in accordance with one novel aspect. 5G new radio (NR) network 100 includes a user equipment (UE) 101 and a plurality of base stations gNB 102, gNB 103, and gNB 104. MBS service area 10 covers multiple MBS Single Frequency Network (MBSFN) areas (e.g., MBSFN area 1 and MBSFN area 2). An MBSFN area comprises a group of cells within an MBSFN service area of a network that are coordinated to achieve MBSFN transmission. An MBSFN service area is defined as an area of network in which all base stations (gNBs) can be synchronized to perform MBSFN transmission. MBS service areas are capable of supporting one or more MBSFN areas. On a given frequency layer, an eNB can only belong to one MBS service area. Under the MBS service area, a cell can belong to one or more MBSFN areas and support MBS services for all the belonging MBSFN areas. In Figure 1, gNB 102 belongs to MBSFN area 1 and serves cell 17 for MBS service over a component carrier (CC), gNB 103 belongs to both MBSFN area 1 and area 2 and serves cell 18 for MBS service over the CC, gNB 104 belongs to MBSFN area 2 and serves cell 19 for MBS service over the CC. UE 101 registers to a PLMN, and subscribes to a specific MBS service in cell 17 served by gNB 102.

EPS networks are packet-switched (PS) Internet Protocol (IP) networks. When a UE joins an evolved packet system (EPS) network, a Packet Data Network (PDN) address (i.e., the one that can be used on the PDN) is assigned to the UE for its connection to the PDN. In 4G, EPS has defined a Default EPS Bearer to provide the IP Connectivity that is Always-On. In 5G, a PDU session establishment procedure is a parallel procedure of a PDN connection procedure in 4G. A PDU session defines the association between the UE and the data network that provides a PDU connectivity service. Each PDU session is identified by a PDU session ID, and can be established over a 3GPP RAN, and/or over a non-3GPP AN for radio access. 5G session management (5GSM) for PDU sessions over both 3GPP access and non-3GPP access are managed by AMF and SMF via NAS signaling.

Both the network and the UE can initiate different PDU session procedures, e.g., PDU session establishment procedure, PDU session modification procedure, and PDU session release procedure, for managing PDU sessions. UE can request to join an MBS by using PDU session establishment procedure or PDU session modification procedure with the *Requested MBS container* IE for the following MBS operations: Join MBS session and Leave MBS session. The network can also apply the PDU session establishment procedure or PDU session modification procedure with the *Received MBS container* IE for the following operations/decisions: MBS service area update, MBS join is accepted, MBS join is rejected, and Remove UE from the MBS session. In the current 3GPP specification, UE can request to join an MBS by using PDU session establishment procedure for new PDU sessions. However, there are other cases where the UE can initiate PDU session establishment procedure, e.g., for existing PDU sessions or for MA PDU sessions. It's undefined how UE can request to join an MBS by using PDU session establishment procedure for cases other than new PDU sessions.

In accordance with one novel aspect, a method for handling the joining of an MBS session via a PDU session establishment procedure is provided (110). UE 101 sends a PDU session establishment request message that includes a requested MBS container IE to request to join an MBS session. The request message initiates a PDU session establishment procedure, with a request type indicating that the PDU session establishment procedure is for an existing PDU session, or for an MA PDU session. In response, UE 101 receives a PDU session establishment accept message that includes a received MBS container IE. If the MBS join is accepted, then UE 101 can join a corresponding MBS session associated with the existing PDU or the MA PDU session. Furthermore, a specific request type is used to indicate different scenarios: 1)HANDOVER 5G PDU SESSION FROM NON-3GPP TO 3GPP; 2) TRANSFER 4G PDN CONNECTION (EPS) TO 5G; 3) TRANSFER 4G PDN CONNECTION (NON-3GPP) TO 5G; 4) ESTABLISH UP RESOURCE OVER 3GPP FOR 5G MA PDU; and 5) TRANSFER MA PDU (PDN LEG IN EPS) TO 5G MA PDU such that the UE can request to join MBS under the above specific scenarios.

Figure 2 illustrates simplified block diagrams of wireless devices, e.g., a UE 201 and a network entity 211 in accordance with embodiments of the current invention. Network entity 211 may be a base station and/or an AMF/SMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control function modules and circuits 290. Protocol stacks 280 includes Non-Access-Stratum (NAS) layer to communicate with an AMF/SMF/MME entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. In one example, control function modules and circuits 290 includes PDU session handling circuit 291 that handles PDU establishment, modification, and release procedures, and configuration and control circuit 292 that provides different parameters to configure and control UE of related functionalities including PDU session management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor associated with software may be used to implement and configure features of UE 201.

UE 201 also includes protocol stacks 260 and a set of control function modules and circuits 270. Protocol stacks 260 includes NAS layer to communicate with an AMF/SMF/MME entity connecting to the core network, RRC layer for high layer configuration and control, PDCP/RLC layer, MAC layer, and PHY layer. Control function modules and circuits 270 may be implemented and configured by software, firmware, hardware, and/or combination thereof. The control function modules and circuits, when executed by the processors via program instructions contained in the memory, interwork with each other to allow UE 201 to perform embodiments and functional tasks and features in the network.

In one example, control function modules and circuits 270 includes a PDU session handling circuit 271 that performs PDU session establishment, modification, and release procedures with the network, and a config and control circuit 272 that handles configuration and control parameters for mobility management and session management. In one example, the 5GS MBS capable UE 201 sends a PDU session establishment request message that includes a requested MBS container IE to request to join an MBS session, and in response receives a PDU session establishment accept message that includes a received MBS container IE from network entity 211. The UE indicates that the PDU session establishment is for an existing PDU session or for an MA PDU session.

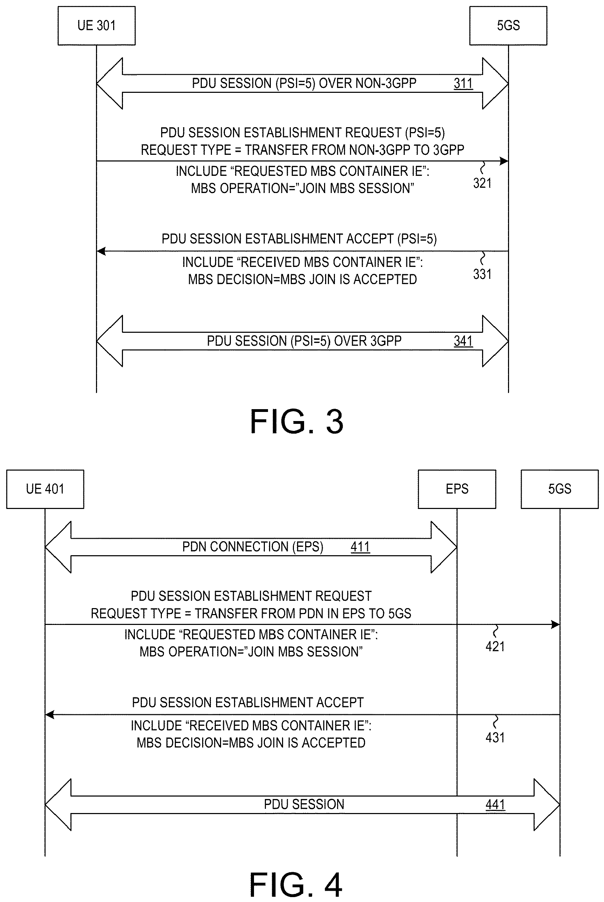

Figure 3 illustrates one embodiment of PDU session establishment procedure where a UE requests to join an MBS session by transferring a PDU session over non-3GPP access to 3GPP access. In step 311, UE 301 establishes a PDU session (PSI=5) in 5GS, the PDU session is established over non-3GPP access. In step 321, UE 301 initiates a PDU session establishment procedure by sending a PDU session establishment request message (for transfer the existing PDU session) to the network, e.g., the session management function (SMF). The PDU session establishment request message includes a "Requested MBS container IE", with an MBS option = "Join MBS Session" + MBS Session ID type = "TMGI" or MBS Session ID type = "source specific IP multicast address" + MBS Session ID = "TMGI" or MBS Session ID = "corresponding address". Furthermore, the PDU session establishment request message includes a specific request type, which indicates that the PDU session establishment procedure is to transfer the existing PDU session (PSI=5) from non-3GPP access to 3GPP access.

In step 331, the network sends a PDU session establishment accept message, which includes a "Received MBS Container IE", with an MBS decision = "MBS join is accepted" + TMGI + optionally source IP address information and Destination IP address information = "corresponding address". The accept message may also include Received MBS information: MBS start time, MBS security container, MBS service area = "MBS TAI list, the NE CGI list or both". The accept message may also include MBS service area = "MBS TAI list, the NE CGI list or both". Upon receiving the PDU session establishment accept message, in step 341, the PDU session (PSI=5) is transferred from non-3GPP access to 3GPP access for data communication and for MBS service.

Figure 4 illustrates one embodiment of PDU session establishment procedure where a UE requests to join an MBS session by transferring a PDN connection in EPS to a PDU session in 5GS. In step 411, UE 401 establishes a PDN connection in EPS, the PDN connection is established over 3GPP access. In step 421, UE 401 initiates a PDU session establishment procedure by sending a PDU session establishment request message (for transfer the existing PDN connection) to the network, e.g., the session management function (SMF). The PDU session establishment request message includes a "Requested MBS container IE", with an MBS option = "Join MBS Session" + MBS Session ID type = "TMGI" or MBS Session ID type = "source specific IP multicast address" + MBS Session ID = "TMGI" or MBS Session ID = "corresponding address". Furthermore, the PDU session establishment request message includes a specific request type, which indicates that the PDU session establishment procedure is to transfer the existing PDN connection from EPS (S1 mode) to 5GS (N1 mode).

In step 431, the network sends a PDU session establishment accept message, which includes a "Received MBS Container IE", with an MBS decision = "MBS join is accepted" + TMGI + optionally source IP address information and Destination IP address information = "corresponding address". The accept message may also include Received MBS information: MBS start time, MBS security container, MBS service area = "MBS TAI list, the NE CGI list or both". The accept message may also include MBS service area = "MBS TAI list, the NE CGI list or both". Upon receiving the PDU session establishment accept message, in step 441, the PDN connection in EPS is transferred to PDU session in 5GS for data communication and for MBS service.

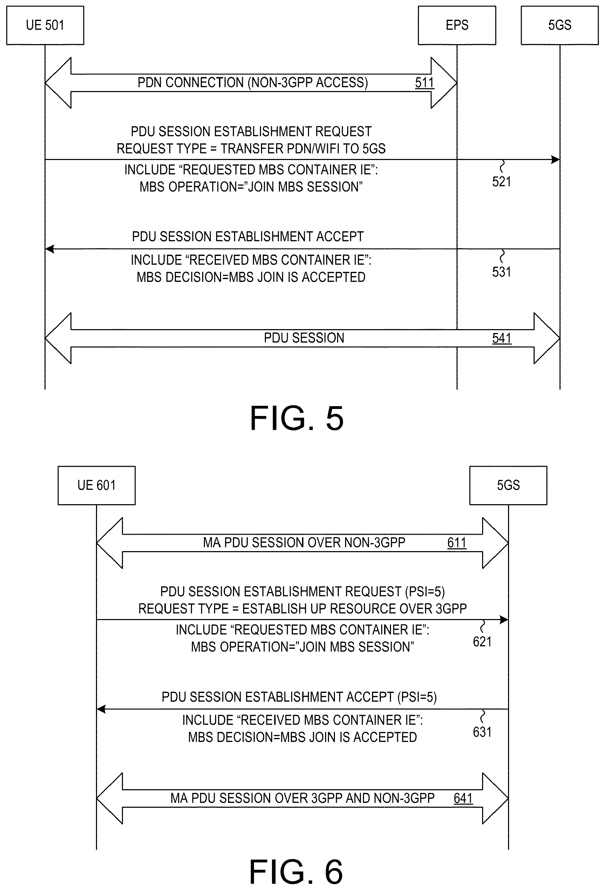

Figure 5 illustrates one embodiment of PDU session establishment procedure where a UE requests to join an MBS session by transferring a PDN connection in non-3GPP connected to EPC to a PDU session in 5GS. In step 511, UE 501 establishes a PDN connection in EPS, the PDN connection is established over untrusted non-3GPP access connected to EPC. In step 521, UE 501 initiates a PDU session establishment procedure by sending a PDU session establishment request message (for transfer the existing PDN connection) to the network, e.g., the session management function (SMF). The PDU session establishment request message includes a "Requested MBS container IE", with an MBS option = "Join MBS Session" + MBS Session ID type = "TMGI" or MBS Session ID type = "source specific IP multicast address" + MBS Session ID = "TMGI" or MBS Session ID = "corresponding address". Furthermore, the PDU session establishment request message includes a specific request type, which indicates that the PDU session establishment procedure is to transfer the existing PDN connection (in untrusted non-3GPP access connected to EPC) to 5GS.

In step 531, the network sends a PDU session establishment accept message, which includes a "Received MBS Container IE", with an MBS decision = "MBS join is accepted" + TMGI + optionally source IP address information and Destination IP address information = "corresponding address". The accept message may also include Received MBS information: MBS start time, MBS security container, MBS service area = "MBS TAI list, the NE CGI list or both". The accept message may also include MBS service area = "MBS TAI list, the NE CGI list or both". Upon receiving the PDU session establishment accept message, in step 541, the PDN connection (in untrusted non-3GPP access connected to EPC) is transferred to PDU session in 5GS for data communication and for MBS service.

Figure 6 illustrates one embodiment of PDU session establishment procedure where a UE requests to join an MBS session by establishing user-plane resource over 3GPP for an MA PDU session in 5GS. In step 611, UE 601 establishes an MA PDU session in 5GS, the MA PDU session is established over non-3GPP access (e.g., user-plane resource over non-3GPP access is established for the MA PDU session). In step 621, UE 601 initiates a PDU session establishment procedure by sending a PDU session establishment request message (for establishing user-plane resource for the MA PDU session) to the network, e.g., the session management function (SMF). The PDU session establishment request message includes a "Requested MBS container IE", with an MBS option = "Join MBS Session" + MBS Session ID type = "TMGI" or MBS Session ID type = "source specific IP multicast address" + MBS Session ID = "TMGI" or MBS Session ID = "corresponding address". Furthermore, the PDU session establishment request message includes a specific request type, which indicates that the PDU session establishment procedure is to establish user-plane resource over 3GPP access for the MA PDU session.

In step 631, the network sends a PDU session establishment accept message, which includes a "Received MBS Container IE", with an MBS decision = "MBS join is accepted" + TMGI + optionally source IP address information and Destination IP address information = "corresponding address". The accept message may also include Received MBS information: MBS start time, MBS security container, MBS service area = "MBS TAI list, the NE CGI list or both". The accept message may also include MBS service area = "MBS TAI list, the NE CGI list or both". Upon receiving the PDU session establishment accept message, in step 641, user-plane resource over 3GPP access is established for the MA PDU session for data communication and for MBS service.

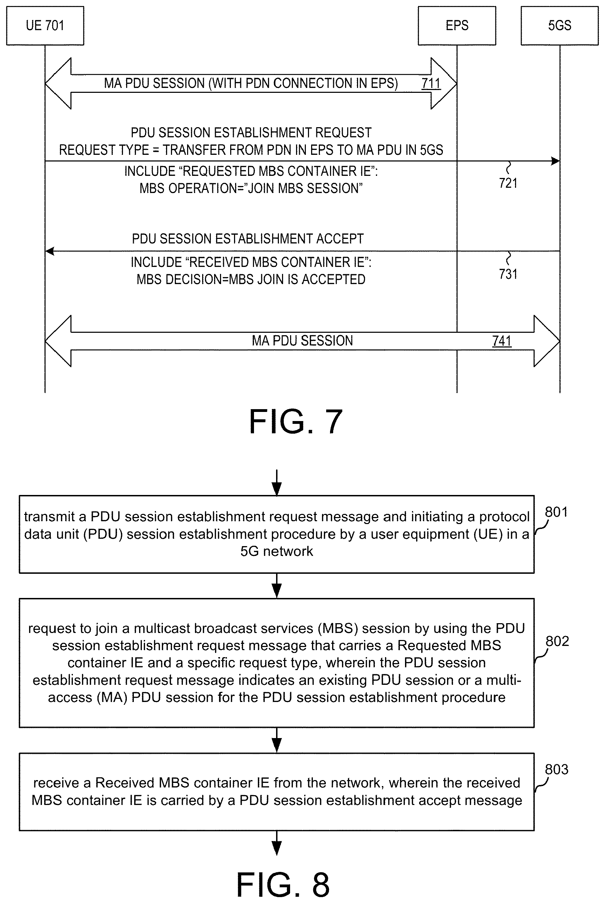

Figure 7 illustrates one embodiment of PDU session establishment procedure where a UE requests to join an MBS session by transferring an MA PDU session with PDN connection in EPS as user-plane resource over 3GPP to an MA PDU session in 5GS. In step 711, UE 701 establishes an MA PDU session in EPS, the MA PDU session is established over 3GPP access (e.g., a PDN leg is established as the user-plane resource of the MA PDU session). In step 721, UE 701 initiates a PDU session establishment procedure by sending a PDU session establishment request message (for transferring the existing MA PDU session) to the network, e.g., the session management function (SMF). The PDU session establishment request message includes a "Requested MBS container IE", with an MBS option = "Join MBS Session" + MBS Session ID type = "TMGI" or MBS Session ID type = "source specific IP multicast address" + MBS Session ID = "TMGI" or MBS Session ID = "corresponding address". Furthermore, the PDU session establishment request message includes a specific request type, which indicates that the PDU session establishment procedure is to transfer the existing MA PDU session with the PDN leg to 5GS.

In step 731, the network sends a PDU session establishment accept message, which includes a "Received MBS Container IE", with an MBS decision = "MBS join is accepted" + TMGI + optionally source IP address information and Destination IP address information = "corresponding address". The accept message may also include Received MBS information: MBS start time, MBS security container, MBS service area = "MBS TAI list, the NE CGI list or both". The accept message may also include MBS service area = "MBS TAI list, the NE CGI list or both". Upon receiving the PDU session establishment accept message, in step 741, the MA PDU session with PDN leg is transferred from EPS to 5GS for data communication and for MBS service.

Figure 8 is a flow chart of a method of UE joining an MBS session via a PDU session establishment procedure for existing or MA PDU session in accordance with one novel aspect of the present invention. In step 801, a UE transmits a PDU session establishment request message and initiates a protocol data unit (PDU) session establishment procedure in a 5G network. In step 802, the UE requests to join a multicast broadcast services (MBS) session by using the PDU session establishment request message that carries a Requested MBS container IE and a specific request type, wherein the PDU session establishment request message indicates an existing PDU session or a multi-access (MA) PDU session for the PDU session establishment procedure. In step 803, the UE receives a Received MBS container IE from the network, wherein the received MBS container IE is carried by a PDU session establishment accept message.

Although the present invention has been described in connection with certain specific embodiments for instructional purposes, the present invention is not limited thereto. In particular, the UE according to the invention may be adapted to perform each of the methods described in connection with figures 3 to 8 individually or in arbitrary combination. In this case, a transmitter of the UE is adapted to transmit a PDU session establishment request message to initiate a PDU session establishment procedure in 5GS, a MBS handling circuit of the UE is adapted to request to join an MBS session by using the PDU session establishment request message that carries a Requested MBS container IE and a specific request type, wherein the PDU session establishment request message indicates an existing PDU session or a MA PDU session for the PDU session establishment procedure, and a receiver of the UE is adapted to receive a Received MBS container IE from the network, wherein the received MBS container IE is carried by a PDU session establishment accept message. Further, a PDU session handling circuit of the UE may be adapted to establish a PDU session and/or a PDN connection and/or an MA PDU session and/or join the MBS session according to the methods described above in connection with the figures, in particular figures 3 to 8 and/or below in the claims. Accordingly, various modifications, adaptations, and combinations of various features of the described embodiments can be practiced without departing from the scope of the invention as set forth in the claims.

## Claims

1. A method, comprising:
transmitting a PDU session establishment request message and initiating a protocol data unit, in the following also referred to as PDU, session establishment procedure by a user equipment, in the following also referred to as UE, in a 5G network (801);
requesting to join a multicast broadcast services, in the following also referred to as MBS, session by using the PDU session establishment request message that carries a Requested MBS container IE and a specific request type, wherein the PDU session establishment request message indicates an existing PDU session or a multi-access, in the following also referred to as MA, PDU session for the PDU session establishment procedure (802); and
receiving a Received MBS container IE from the network, wherein the received MBS container IE is carried by a PDU session establishment accept message (803).

2. The method of Claim 1, further comprising:
establishing a PDU session over non-3GPP access in 5GS, wherein the specific request type indicates transferring the PDU session from non-3GPP access to 3GPP access.

3. The method of Claim 1 or 2, further comprising:
establishing a PDN connection over 3GPP access in EPS, wherein the specific request type indicates transferring the PDN connection to 5GS.

4. The method of any one of Claims 1 to 3, further comprising:
establishing a PDN connection over non-3GPP access connected to EPC, wherein the specific request type indicates transferring the PDN connection to 5GS.

5. The method of any one of Claims 1 to 4, further comprising:
establishing an MA PDU session in 5GS over non-3GPP access, wherein the specific request type indicates establishing user-plane resource over 3GPP access for the MA PDU session.

6. The method of any one of Claims 1 to 5, further comprising:
establishing an MA PDU session with a PDN connection over non-3GPP access as user-plane resource, wherein the specific request type indicates establishing user-plane resource over 3GPP access for the MA PDU session.

7. The method of any one of Claims 1 to 6, further comprising:
establishing an MA PDU session with a PDN connection in EPS as user-plane resource, wherein the specific request type indicates transferring the MA PDU session with the PDN connection to an MA PDU session in 5GS.

8. The method of any one of Claims 1 to 7, wherein the UE joins the MBS session that is associated with the existing PDU session or associated with the MA PDU session.

9. A User Equipment (201), in the following also referred to as UE, comprising:
a transmitter (204) that transmits a protocol data unit, in the following also referred to as PDU, session establishment request message to initiate a PDU session establishment procedure in 5GS;
a multicast broadcast services, in the following also referred to as MBS, handling circuit that requests to join an MBS session by using the PDU session establishment request message that carries a Requested MBS container IE and a specific request type, wherein the PDU session establishment request message indicates an existing PDU session or a multi-access, in the following also referred to as MA, PDU session for the PDU session establishment procedure; and
a receiver(204) that receives a Received MBS container IE from the network, wherein the received MBS container IE is carried by a PDU session establishment accept message.

10. The UE of Claim 9, further comprising:
a PDU session handling circuit (271) that establishes a PDU session over non-3GPP access in 5GS, wherein the specific request type indicates transferring the PDU session from non-3GPP access to 3GPP access.

11. The UE of Claim 9 or 10, further comprising:
a PDU session handling circuit (271) that establishes a PDN connection over 3GPP access in EPS, wherein the specific request type indicates transferring the PDN connection to 5GS.

12. The UE of any one of Claims 9 to 11, further comprising:
a PDU session handling circuit (271) that establishes a PDN connection over non-3GPP access connected to EPC, wherein the specific request type indicates transferring the PDN connection to 5GS.

13. The UE of any one of Claims 9 to 12, further comprising:
a PDU session handling circuit (271) that establishes an MA PDU session in 5GS over non-3GPP access, wherein the specific request type indicates establishing user-plane resource over 3GPP access for the MA PDU session.

14. The UE of any one of Claims 9 to 13, further comprising:
a PDU session handling circuit (271) that establishes an MA PDU session with a PDN connection over non-3GPP access as user-plane resource, wherein the specific request type indicates establishing user-plane resource over 3GPP access for the MA PDU session.

15. The UE of any one of Claims 9 to 14, further comprising:
a PDU session handling circuit (271) that establishes an MA PDU session with a PDN connection in EPS as user-plane resource, wherein the specific request type indicates transferring the MA PDU session with the PDN connection to an MA PDU session in 5GS.
